# EUROPEAN PATENT APPLICATION

(11) **EP 4 653 297 A1**
(43) Date of publication of application: **26.11.2025**
(21) Application number: 24177072.6
(22) Date of filing: 21.05.2024
(51) Int. Cl.: B62D 35/00, B62D 37/02, B62D 35/02

(54) **AERODYNAMIC UNIT AND VEHICLE COMPRISING SUCH AERODYNAMIC UNIT**

(71) Applicant: Bugatti Rimac LLC, 10431 Sveta Nedjelja (HR)
(72) Inventor: Radan, Boze, 21000 Split (HR); Sostaric, David, 40000 Cakovec (HR); Maric, Rok, 9240 Ljutomer (SI)
(74) Representative: Sonnenberg Harrison Partnerschaft mbB

(57) **Abstract**

An aerodynamic unit with a first air guiding device and a second air guiding device is described. The aerodynamic unit is connectable to at least a part of a vehicle for adjusting aerodynamic properties of the vehicle. The aerodynamic unit comprises the first air guiding device. The first air guiding device is configured to be movable for guiding a first air stream. The aerodynamic unit further comprises the second air guiding device. The second air guiding device is configured to be movable for guiding a second air stream. The first air guiding device is rigidly or movably connected to the second air guiding device.

## Description

### FIELD OF THE INVENTION

The present invention relates to an aerodynamic unit for adjusting aerodynamic properties and to a vehicle comprising the aerodynamic unit.

### BACKGROUND OF THE INVENTION

Optimizing the aerodynamic behavior of vehicles has always been a key challenge, in particular in the development of high-performance cars, since aerodynamic properties impact, for example, driving dynamics, top speed, and fuel consumption. For this purpose, aerodynamic devices such as "diffusers" or "air dams" have been introduced to improve the aerodynamic properties of the vehicles, i.e., the overall aerodynamic performance.

A diffuser is used as a separate device having a specific shape and mounted to a certain position of the vehicle. The shape/geometry of the diffuser is determined by various parameters, such as angle, length, width, and curvature, impacting properties such as downforce and drag of the vehicle. The diffuser(s) can be located, for example, at the underbody of the vehicle in a front, mid, and/or rear zone affecting front and/or rear downforce distribution and, thus, contributing to an aerodynamic balance of the vehicle.

Static and active front diffusers have been used to improve the aerodynamic properties of cars. Active front diffusers are known, for example, from commercially available products.

Furthermore, an air dam is used as a separate device having a specific shape and mounted to a certain position of the vehicle. The air dam is able to impact the same aerodynamic parameters as mentioned with respect to the diffuser while the impact of the air dam differs in the magnitude and ratio of drag and downforce changes. The shape/geometry of the air dam is determined by various parameters, such as width, length, height, volume, and inclination. The air dam can be located, for example, at the front in a central position, in front of the front tires and/or in front of the rear tires contributing to the aerodynamic balance of the vehicle as well as the fuel consumption.

Static and active air dams have been used to improve the aerodynamic properties of cars. An active air dam is known, for example, from commercially available products.

Especially the design of high-performance vehicles desires the application of such aerodynamic devices, i.e., diffusers and air dams, to further enhance the aerodynamic performance for achieving higher top speeds and shorter lap times. Furthermore, an aerodynamic setup is desirable which is able to actively adjust the aerodynamic devices according to different driving modes (use cases).

In the automotive context, however, one or both of the aerodynamic devices are typically mounted to the vehicle in a static arrangement. Alternatively, the aerodynamic devices are often mounted to the vehicle such that only one is able to move while the other one remains static. The static arrangement prevents adjustment to different driving scenarios, i.e., to different aerodynamic configurations. The aerodynamic devices require sufficient space and individual spatial settings which often makes suitable arrangements at the vehicle difficult.

Therefore, current aerodynamic systems often allow only limited active control for adjusting the aerodynamic performance of the vehicle to different driving scenarios. Furthermore, aerodynamic systems and their components add additional weight to the vehicle reducing top speed, increasing fuel consumption, and resulting in higher costs.

The prior art thus shows an absence of an aerodynamic unit with an increased variability for enhancing the aerodynamic properties at higher positional flexibility while reducing weight.

Against this background, it is an objective of the present invention to provide an improved aerodynamic unit, and a vehicle comprising the improved aerodynamic unit.

### SUMMARY OF THE INVENTION

The objective is achieved by an aerodynamic unit having the features of claim 1. The objective is further achieved by a vehicle having the features of claim 13.

An aerodynamic unit is disclosed in the present document. The aerodynamic unit is connectable to at least a part of a vehicle for adjusting aerodynamic properties of the vehicle. The aerodynamic unit comprises a first air guiding device configured to be movable for guiding a first air stream. The aerodynamic unit comprises a second air guiding device configured to be movable for guiding a second air stream. The first air guiding device is rigidly or movably connected to the second air guiding device.

The present invention therefore relates to an aerodynamic unit comprising the first air guiding device and the second air guiding device being both movable. The movement of the first air guiding device and the second air guiding device enables adjusting the aerodynamic properties according to different driving scenarios. The aerodynamic unit according to the present invention therefore enables better tuning of downforce and drag due to higher variability and, thus, improving the overall aerodynamic performance. The aerodynamic unit also enables improving further related properties of the vehicle such as driving dynamics or fuel consumption. Connecting the first air guiding device to the second air guiding device also enables moving one device by the movement of the other device contributing to a compact design.

The term "aerodynamic unit" refers to an apparatus for adjusting the aerodynamic properties of a vehicle. The apparatus is provided at the vehicle via a connection to at least a part of the vehicle. The term "part" may be one single component, or may refer to two or more components, or to an assembly of components.

The term "vehicle" refers to a mechanical and/or powered means of transportation designed to carry people and/or goods. The term "vehicle" refers in the present invention preferably to cars, even more preferably to high-performance cars. Other vehicles, however, such as, but not limited to, all-terrain vehicles, pick-up trucks, or trucks may also be associated with the term "vehicle".

The term "first air guiding device" refers to one or more mechanical components enabling manipulation of an air stream. The first air guiding device is configured to be movable for guiding the air stream in a certain manner.

The term "first air stream" refers to continuous and directional flow of air, typically in the atmosphere of the Earth. The term "first air stream" further refers to a specific portion/cross-section of the entire air stream facing the vehicle during movement.

The term "second air guiding device" refers to one or more mechanical components enabling manipulation of an air stream. The second air guiding device is configured to be movable for guiding the air stream in a certain manner.

The term "second air stream" refers to continuous and directional flow of air, typically in the atmosphere of the Earth. The term "second air stream" further refers to a specific portion/cross-section of the entire air stream facing the vehicle during movement. The second air stream is considered as being essentially different to the first air stream.

The term "rigidly or movably connected" refers to any connection allowing to transfer force, motion, or energy from one of the first air guiding device and the second air guiding device to the other one of the first air guiding device and the second air guiding device.

In a first aspect, one of the first air guiding device and the second air guiding device is a diffuser while the other one of the first air guiding device and the second air guiding device is an air dam. In a further aspect, the first air guiding device and the second air guiding device are configured to be diffusers. In a yet further aspect, the first air guiding device and the second air guiding device are configured to be air dams.

In another aspect, the connection between the first air guiding device and the second air guiding device is implemented via a mechanical connection in the form of, for example, but not limited to, a mechanical joint connection or a deformable connecting member. In a further aspect, the connection is implemented via a magnetic connection.

In accordance with another aspect, at least one of the first air guiding device and the second air guiding device can be configured to be rotatable about a rotational axis.

Using the rotational axis allows to define an axis about which the at least one of the first air guiding device and the second air guiding device rotates relative to the vehicle. The movement of the first air guiding device and the second air guiding device enables adjusting the aerodynamic properties of the vehicle.

The term "rotational axis" refers to an imaginary line about which an object rotates. The rotational axis serves as the reference point/line for describing the rotational motion of the object.

In another aspect, one of the first air guiding device and the second air guiding device rotates about the rotational axis while the other one of the first air guiding device and the second air guiding device exhibits a translational movement. In a further aspect, the first air guiding device and the second air guiding device rotate about the rotational axis. In the further aspect, the rotational axis comprises two rotational axes.

In accordance with another aspect, the aerodynamic unit can further comprise a first rotational axis for rotating the first air guiding device and a second rotational axis for rotating the second air guiding device. The first rotational axis is different from the second rotational axis.

Using two different rotational axes enables precise adjustment of the aerodynamic properties of the vehicle.

In accordance with another aspect, the first rotational axis and the second rotational axis can be non-parallel.

Using two non-parallel rotational axes enables precise and flexible adjustment of the aerodynamic properties of the vehicle.

In accordance with another aspect, the first air guiding device can be connected to the second air guiding device via a mechanical connection, preferably the mechanical connection comprises a mechanical joint, more preferably the mechanical connection comprises a rod end bearing.

The mechanical connection enables a robust, simple, and low-cost implementation for connecting the first air guiding device to the second air guiding device.

The term "mechanical connection" refers to the physical linkage or attachment between two or more components enabling the transmission of force, motion, or energy between the linked components.

In another aspect, the mechanical connection comprises an assembly of rigid or at least partially rigid members to transmit the desired motion. In a further aspect, the mechanical connection may further comprise components such as, but not limited to, a spring element or a damper element to further enhance the aerodynamic unit.

In accordance with another aspect, the aerodynamic unit can further comprise an actuator. The actuator is configured to move the first air guiding device and/or the second air guiding device for enabling movement of the first air guiding device and the second air guiding device.

The actuator enables the application of movement to the first air guiding device and/or the second air guiding device for adjusting the aerodynamic properties of the vehicle.

The term "actuator" refers to a device that converts input energy into mechanical action or movement of the first air guiding device and the second air guiding device.

In another aspect, the actuator comprises an electric linear motor to move the first air guiding device and/or the second air guiding device.

In accordance with another aspect, the first air guiding device can comprise a first base member and the second air guiding device can comprise a second base member. The first base member is connected to the second base member. The first base member comprises a first connection portion for connecting the first base member to at least a part of the vehicle. The second base member comprises a second connection portion for connecting the second base member to at least a part of the vehicle.

Using the first base member comprising the first connection portion and the second base member comprising the second connection portion enables movably connecting the first air guiding device and the second air guiding device to the vehicle in a secure and compact manner.

The term "first base member" refers to a component of the first air guiding device providing a first surface along which the first air stream streams past as well as providing mechanical or structural support for other components. The first base member preferably has a panel-like shape. The first base member may, however, exhibit any shape or form suitable for improving the aerodynamic properties of the vehicle. Preferably, the mechanical connection is provided at the first base member. The first base member may also provide support for a link member to connect the actuator with the first base member.

The term "first connection portion" refers to one or more components or to one or more segments of the first base member designed for attaching the first air guiding device to the vehicle.

In another aspect, the first air guiding device comprises two first connection portions formed at the first base member and extending basically perpendicular to a surface being opposite to the first surface. In a further aspect, the first air guiding device may comprise only one first connection portion, or more than two first connection portions. In a yet further aspect, the first connection portion is formed by a first segment. The first segment is integrally formed at one end of the first base member. The first segment has different properties compared with the rest of the first base member, e.g., in terms of stiffness, and hence enabling attachment and movement of the first air guiding device.

The term "second base member" refers to a component of the second air guiding device providing mechanical or structural support for other components. The second base member preferably has an elongated shape. The second base member may, however, exhibit any suitable shape or form. Preferably, the mechanical connection is provided at the second base member. The second base member may also provide support for other components, for example, the link member.

The term "second connection portion" refers to one or more components or to one or more segments of the second base member designed for attaching the second air guiding device to the vehicle.

In another aspect, the second air guiding device comprises two second connection portions formed at the second base member. In a further aspect, the second air guiding device may comprise only one second connection portion, or more than two second connection portions. In a yet further aspect, the second connection portion is formed by a second segment. The second segment is integrally formed at one end of the second base member. The second segment has different properties compared with the rest of the second base member.

In accordance with another aspect, the at least one of the first base member and the second base member can be made of fiber-reinforced plastic, preferably the fiber-reinforced plastic comprises carbon fibers.

Using fiber-reinforced plastic enables high rigidity with low weight.

The term "fiber-reinforced plastic" refers to a composite material comprising a plastic/polymer matrix reinforced with fibers. The plastic/polymer matrix provides support and flexibility while the embedded fibers enhance, for example, strength, stiffness, and durability. Typically, the fibers are, but not limited to, carbon, glass, or aramid fibers. The plastic/polymer matrix often comprises, but not limited to, epoxy or polyester resin. It is understood that the mentioned composite materials are only examples and that there are numerous other matrix-fiber combinations suitable for the present invention.

In accordance with another aspect, the first base member can comprise a first flexible part for supporting guidance of the first air stream and the second base member comprises a second flexible part for supporting guidance of the second air stream.

Using the first flexible part and the second flexible part enables improving the guidance of the first air stream and the second air stream contributing to the overall aerodynamic performance of the vehicle.

The term "first flexible part" refers to a component being able to bend according to the movement of the first base member.

In another aspect, the first flexible part is a separate component. In a further aspect, the first flexible part is integrally formed with the first base member.

The term "second flexible part" refers to a component being flexible, hence, being able to bend. The second flexible part may, however, be formed as a rigid component.

In another aspect, the second flexible part is a separate component. In a further aspect, the second flexible part is integrally formed with the second base member.

In accordance with another aspect, at least one of the first flexible part or the second flexible part can be made of a synthetic material, preferably the synthetic material is a rubber, more preferably the synthetic material is an ethylene propylene diene monomer (EPDM) rubber.

In accordance with another aspect, the first air guiding device is rotatable by a first angle about the first rotational axis and the second air guiding device is rotatable by a second angle about the second rotational axis, wherein the first angle is different to the second angle.

Rotating the first air guiding device by a first angle and rotating the second air guiding device by a second angle different to the first angle enables precise and flexible adjustment of the aerodynamic properties of the vehicle.

In accordance with another aspect, the aerodynamic unit can be connectable to the vehicle via at least one of a screwed connection, a riveted connection, or an adhesive bond.

The connection of the aerodynamic unit to the vehicle via the screwed connection, the riveted connection, or the adhesive bond enables a secure and robust attachment.

A vehicle comprising an aerodynamic unit is disclosed in the present document. The vehicle comprises at least one aerodynamic unit according to any one of the preceding aspects. The at least one aerodynamic unit is connected to at least a part of the vehicle.

In accordance with another aspect, each one of the at least one aerodynamic unit can be individually controllable by a controller.

The use of the controller enables automatic adjustment of the aerodynamic properties of the vehicle and automatic adjustment to different driving scenarios. The individual control of each one of the at least one aerodynamic unit further enables adjustment of the downforce distribution in the form of an "aerodynamic force vectoring" and, thus, enhancing the aerodynamic balance of the vehicle.

The term "controller" refers to a processing device that manages and regulates the operation of one or more electronic devices. The processing device typically processes input signals, issues commands, and oversees the functioning of the one or more electronic devices to achieve a desired outcome. Preferably, the controller controls at least one actuator.

In accordance with another aspect, the vehicle can comprise at least two aerodynamic units. The at least two aerodynamic units are commonly controllable by a controller.

The use of the controller enables automatic adjustment of the aerodynamic properties of the vehicle and automatic adjustment to different driving scenarios. The common control of the aerodynamic units requires only one actuator, thus reducing the overall number of parts and costs while saving weight.

Advantageous aspects of the present disclosure are the subject-matter of the dependent claims. Any and all combinations of at least two features disclosed in the description, the claims, and/or the figures fall within the scope of the present disclosure. Naturally, the explanations given in connection with the aerodynamic unit equivalently relate to the vehicle according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

All aspects and/or embodiments as described above may be combined as deemed fit by the skilled person. Further possible implementations of the invention also comprise not explicitly mentioned combinations of any features and/or aspects and/or embodiments that are described above or below with respect to the exemplary aspects and/or embodiments. In this case, a person skilled in the art will also add individual aspects as improvements or supplementations to the respective basic form of the invention.

"A(n)" in the present case should not necessarily be understood to be restrictive to exactly one element. Rather, a plurality of elements, such as, for example, two, three, or more, can also be provided. Any other numeral used here, too, should not be understood to the effect that there is a restriction to exactly the stated number of elements. Rather, numerical deviations upwards and downwards are possible, unless indicated to the contrary.

### BRIEF DESCRIPTION OF THE FIGURES

FIG. 1 shows a top view of an aerodynamic unit according to a first aspect comprising a first air guiding device and a second air guiding device.
FIG. 2 shows a perspective view of the aerodynamic unit according to the first aspect.
FIG. 3 shows a top view of the first air guiding device according to the first aspect.
FIG. 4 shows a top view of a mechanical connection according to the first aspect.
FIG. 5 shows a link member according to the first aspect.
FIG. 6 shows a top view of the second air guiding device according to the first aspect.
FIG. 7 shows a side view of the second air guiding device according to the first aspect.

### DETAILED DESCRIPTION OF THE INVENTION

The invention will now be described on the basis of the figures. It will be understood that the aspects of the invention described herein are only examples and do not limit the protective scope of the claims in any way. The invention is defined by the claims and their equivalents. It will be understood that features of one aspect of the invention can be combined with a feature of a different aspect or aspects of the invention.

Unless indicated to the contrary, elements that are the same or functionally similarly have been given the same reference signs in the figures. It should also be noted that the illustrations in the figures are not necessarily true to scale.

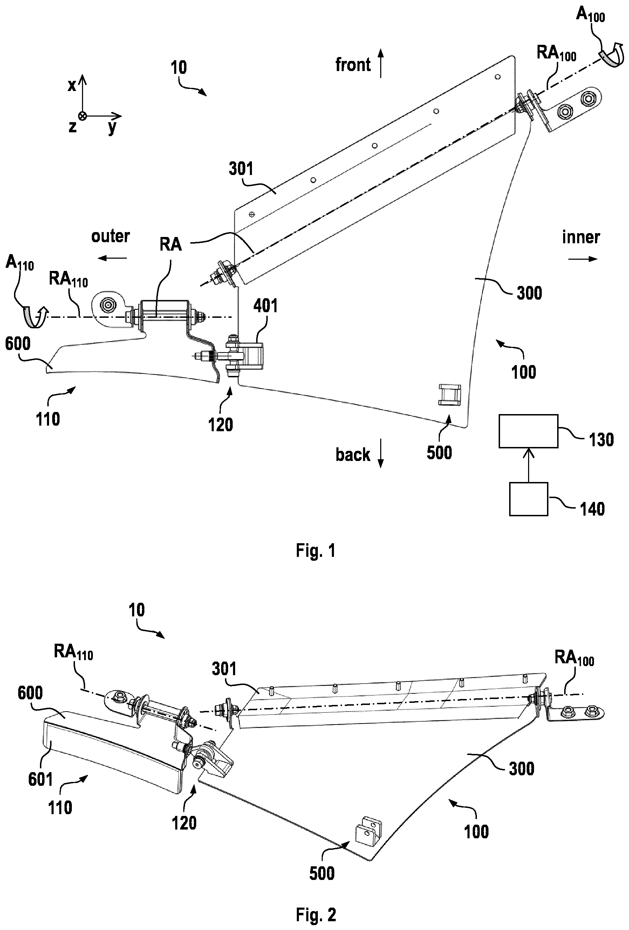

FIG. 1 shows a top view of an aerodynamic unit 10 according to a first aspect comprising a first air guiding device 100 and a second air guiding device 110. The aerodynamic unit 10 according to the first aspect can be implemented, for example, in a vehicle such as a car. The car may be a regular car or a high-performance car.

FIG. 1 illustrates the term "front", "back", "outer", and "inner" associated with arrows which refer to directions with respect to the vehicle. FIG. 1 further depicts a coordinate system comprising x axis, y axis, and z axis.

In the first aspect, the x axis direction corresponds to the front direction of the vehicle, i.e., to the travelling direction, the y axis direction equals the inner direction, and the z axis direction points towards the ground. The inner direction refers to a position being closer to a longitudinal center plane located in the middle of the vehicle along the x axis. The longitudinal center plane is perpendicular to the y axis. The outer direction refers to a position being further apart from the longitudinal center plane. The vehicle further exhibits a transverse center plane located in the middle of the vehicle and perpendicular to the x axis. The back direction hence refers to a position being closer to the transverse center plane of the vehicle. The front direction refers to a position being further apart from the transverse center plane along the x axis. It will be noted that the described directions and/or axes may differ with respect to other aspects.

The aerodynamic unit 10 shown in FIG. 1 can be implemented such that the first air guiding device 100 is located at a front zone of an underbody of the vehicle and the second air guiding device is located in front of a front left tire of the vehicle. It is noted that the position and arrangement of the aerodynamic unit 10 is chosen for illustration purposes only and is not limited thereto. It is understood that corresponding indications of directions (e.g., "front", "back", "outer", "inner", positive x axis, positive y axis, positive z axis) may change when the aerodynamic unit 10 is arranged at a different location of the vehicle.

As shown in FIG. 1, the first air guiding device 100 is arranged next to the second air guiding device 110 along the y axis. The first air guiding device 100 is positioned closer to the longitudinal center plane of the vehicle than the second air guiding device 110.

The first air guiding device 100 comprises a first base member 300. The first base member 300 has a flat panel-like shape. As shown in FIG. 1, the panel-like shape basically extends in the x-y-plane. The first base member 300 is able to rotate about a rotational axis RA, more specifically about a first rotational axis RA₁₀₀. The rotation by a first angle A₁₀₀ about the first rotational axis RA₁₀₀ is configured to be within a first angle range. Preferably, the first angle range may comprise 16 degrees. It will be noted that other implementations of the first angle range are also possible, such as, but not limited to, 0 to 30 degrees, 0 to 90 degrees, or 0 to an angle larger than 90 degrees. It will be further noted that other implementations of the first angle range are also possible, such as, but not limited to, 0 to -30 degrees, 0 to -90 degrees, or an angle smaller than -90 degrees.

The first base member 300 is made of a first composite material comprising fibers and a matrix. The first composite material comprises carbon fibers and a plastic/polymer matrix suitable to support the carbon fibers, for example, an epoxy resin. The first base member 300 may be manufactured by using multiple layers of carbon fibers. In one example, four layers of carbon fibers are used, each layer having 300 grams per square meter (gsm) carbon fibers. It will be noted that a smaller number of layers or a higher number of layers may also be applicable for manufacturing the first base member 300. It will be noted that the first base member 300 may also be made of a different material, for example, a light metal (e.g., aluminum) or a synthetic/polymer material (e.g., polyethylene).

The first base member 300 exhibits a first surface 320 (not shown) along which the first air stream streams past. The first surface 320 is at a bottom side of the first base member 300 facing towards the ground. The design of the shape of the first surface 320 impacts aerodynamic properties of the vehicle, such as downforce and drag. In the first aspect, as shown in FIG. 1, the shape is formed to maximize a flat surface area of the first surface 320 of the first base member 300. It will be understood that the first surface 320 may exhibit a different shape or form which is also suitable to adjust the aerodynamic properties. The first base member 300 also functions as a structural component by providing support for other components.

The first air guiding device 100 further comprises a first flexible part 301. The first flexible part 301 has an elongated form having two long sides. The first flexible part 301 is connected to the first base member 300 along a first long side. Along a second long side, the first flexible part 301 can be attached to the vehicle, indicated in FIG. 1 by five holes enabling attachment by fixation means. The first flexible part 301 is made of rubber or a rubber-like material, such as, but not limited to, ethylene propylene diene monomer (EPDM) rubber. The flexible part 301 is able to bend and, thus, tolerates the rotation of the first base member 300 about the first rotational axis RA₁₀₀.

In the first aspect, the first flexible part 301 supports guidance of the first air stream by improving the transition from a surface of the underbody of the vehicle onto the first surface 320. It will be understood that the first flexible part 301 may also be made of a material or material combination different to rubber or rubber-like material but suitable to fulfill the described function. The material or material combination may comprise, for example, but not limited to, a composite material comprising Kevlar fibers (para-aramid fibers).

The first air guiding device 100 further comprises a link member 500. The link member 500 is arranged at a back-inner portion of first base member 300. The link member 500 couples the first base member 300 with an actuator 130. An actuation force applied by the actuator 130 to the link member 500 results in the rotation of the first base member 300 about the first rotational axis RA₁₀₀. It will be noted that the position of the link member 500 may be located at any other position as long as the actuation force provided by the actuator 130 results in the desired movement of the first air guiding device 100 and the second air guiding device 110. For example, the link member 500 may be arranged at the second air guiding device 110 and may couple the second base member 600 with the actuator 130. It will be further noted that the link member 500 may comprise a first link member provided at the first air guiding device 100 and a second link member provided at the second air guiding device 110 for coupling with the actuator 130.

The actuator 130 comprises an actuation device capable of providing the actuation force to the link member 500. The actuation device preferably provides the actuation force in two directions. In the first aspect, the actuation force is directed downwards (along the positive z axis direction) or upwards (opposite to the positive z axis direction) resulting in a first rotational movement of the first base member 300 corresponding to a "lowering operation" or a second rotational movement of the first base member 300 corresponding to a "lifting operation".

A controller 140 can be provided for controlling the actuator 130. The controller may be a processing unit such as, but not limited to, a programmable logic controller (PLC). The processing unit may comprise a storage unit. The storage unit may, for example, store predetermined driving scenarios corresponding to predetermined actuation forces which allows to set predetermined configurations of the aerodynamic unit 10.

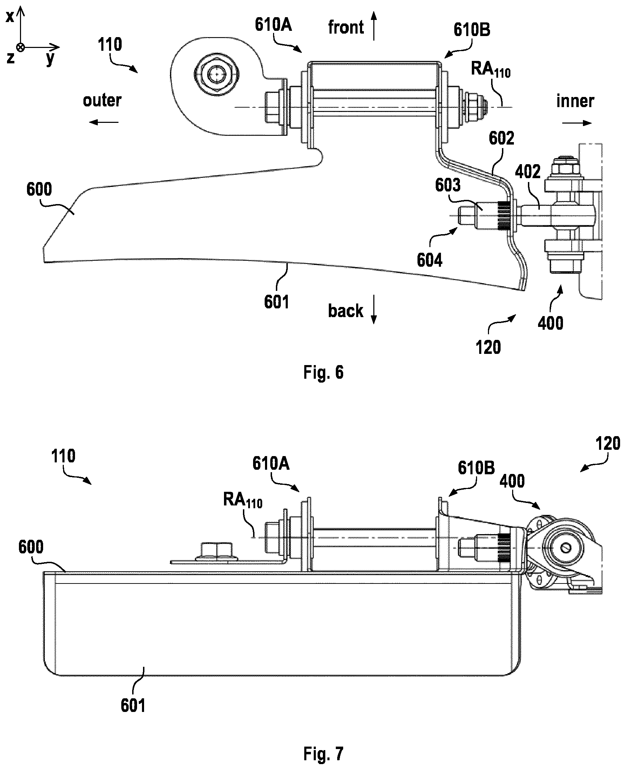

The first air guiding device 100 further comprises a mechanical connection 120. FIG. 1 shows the implementation of the mechanical connection 120 by means of a rod end bearing 400. The rod end bearing 400 includes an angled U-shaped bracket 401. The angled U-shaped bracket 401 is arranged at a back-outer portion of the first base member 300. A rod element 402 of the rod end bearing 400 is connected to the second air guiding device 110, as can be seen in FIG. 6.

The mechanical connection 120 couples the first air guiding device 100 with the second air guiding device 110 and, therefore, transmits motion applied to the first air guiding device 100 by the actuator 130 to the second air guiding device 110. Therefore, only one actuation device, i.e., the actuator 130, enables movement/rotation of the first air guiding device 100 and the second air guiding device 110 which saves weight.

The second air guiding device comprises a second base member 600. As shown in FIG. 1, the second base member 600 has an elongated flat shape and extends in the x-y-plane. The second base member 600 is able to rotate about the rotational axis, more specifically about a second rotational axis RA₁₁₀. In the first aspect, as shown in FIG. 1, the first rotational axis RA₁₀₀ and the second rotational axis RA₁₁₀ are non-parallel. The rotation by a second angle A₁₁₀ about the second rotational axis RA₁₁₀ is configured to be within a second angle range. Preferably, the second angle range may comprise 31.5 degrees. It will be noted that other implementations of the second angle range are also possible, such as, but not limited to, 0 to 40 degrees, 0 to 90 degrees, or 0 to an angle larger than 90 degrees. It will be further noted that other implementations of the second angle range are also possible, such as, but not limited to, 0 to -40 degrees, 0 to -90 degrees, or an angle smaller than -90 degrees.

It is noted that in another aspect of the invention the first rotational axis RA₁₀₀ may be arranged in parallel to the second rotational axis RA₁₁₀, or in a yet another aspect of the invention a single rotational axis may be implemented such that the first rotational axis RA₁₀₀ equals the second rotational axis RA₁₁₀.

The second base member 600 is made of a second composite material comprising fibers and a matrix material. The second composite material comprises carbon fibers and a plastic/polymer matrix suitable to support the carbon fibers, for example, an epoxy resin. The second composite material may be the same material as the first composite material, as described above.

The second air guiding device further comprises a second flexible part 601 (not shown in FIG. 1). The second flexible part 601 is arranged at a bottom surface along a trailing edge of the second base member 600 and basically extends perpendicular to the second base member 600 along the z axis. In the first aspect, the shape of the second flexible part 601 is basically defined by the design of the trailing edge and a distance extending from the bottom surface of the second base member 600. The second flexible part 601 is made of rubber or a rubber-like material, such as, but not limited to, ethylene propylene diene monomer (EPDM) rubber. The second flexible part 601 may hence be able to bend, i.e., is flexible. It will be understood that the second flexible part 601 may also be made of a different material suitable to fulfill the described function. The second flexible part 601 may also be formed as a rigid component.

The second flexible part 601 supports guiding of the second air stream. In the first aspect, the design of the second flexible part 601 enables an improved guidance of the second air stream around the front left tire and, thus, adjusting the aerodynamic properties of the vehicle. It will be understood that the second flexible part 601 may exhibit any other shape or form which is suitable to adjust the aerodynamic properties of the vehicle.

FIG. 2 shows a perspective view of the aerodynamic unit according to the first aspect. FIG. 2 shows the second flexible part 601 having a curved shape.

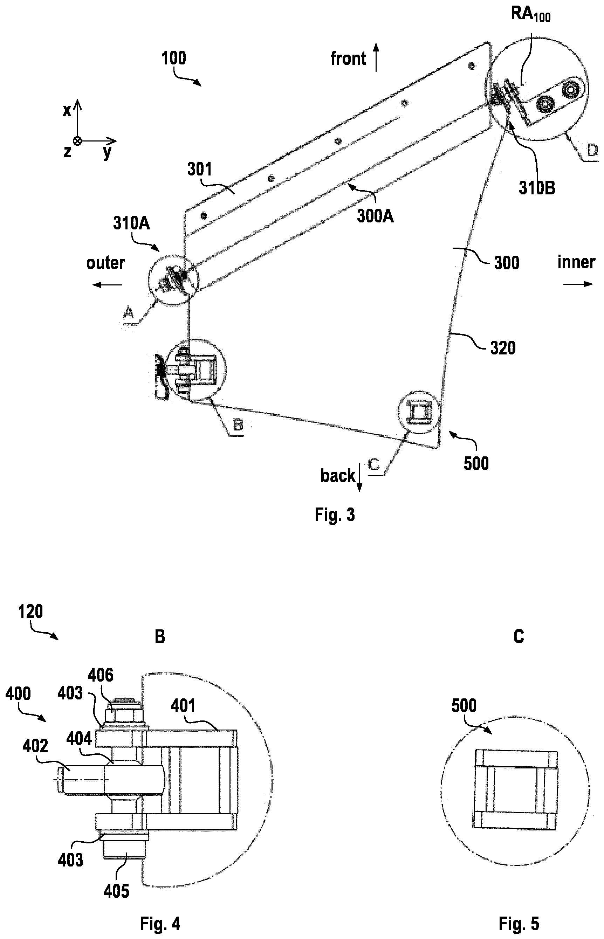

FIG. 3 shows a top view of the first air guiding device according to the first aspect. The first flexible part 301 is connected at one side to the first base member 300, as already mentioned above. The first flexible part 301 is connected at the other side to the vehicle.

The connection of the first flexible part 301 to the first base member 300 is preferably formed by an adhesive applied to an overlap portion. The overlap portion can comprise an area formed by a leading edge 300A of the first base member 300 and an overlap distance. The overlap distance may be 20 mm. It will be understood that the distance may also be less than 20 mm, for example, 10 mm or more than 20 mm, for example, 30 mm to obtain the desired overlap portion. It will also be understood that the overlap area may be defined in a different manner. The connection may also be formed by fixation means such as, but not limited to, screws or rivets.

The first flexible part 301 may also be integrally formed with the first base member 300. In another aspect of the invention, the first flexible part 301 can be co-molded with the first base member 300 to form a single part such that the first flexible part 301 comprises Kevlar fibers and the first base member 300 comprises carbon fibers.

The connection of the first flexible part 301 to the vehicle may be formed by fixation means, such as, but not limited to, screws, rivets, or adhesives. FIG. 3 shows five holes in the first flexible part 301 indicating attachment holes for screws. In one example, M4 screws and nuts are used to attach the first flexible part 301 to the underbody of the vehicle.

FIG. 3 further shows two first connection portions 310A, 310B used to movably connect the first base member 300 to the underbody of the vehicle. It will be understood that the two first connection portions 310A, 310B serve as illustration purposes only and are, therefore, to be understood as one example to implement a connection of the first base member 300 to the vehicle. The two first connection portions 310A, 310B are provided at the first base member 300. The first connection portion 310A is arranged in a front-outer corner of the first base member 300, while the first connection portion 310B is arranged in a front-inner corner. Each of the first connection portions 310A, 310B comprises an L-shaped bracket. The L-shaped bracket is either integrally formed with the first base member 300 or may be a separate component attached to the first base member 300. The L-shaped bracket may accommodate a bonded holder being made of a light metal (e.g., aluminum). The bonded holder serves as a guidance for fixation means which form the first rotational axis RA₁₀₀. The fixation means can comprise, for example, a self-lubricating bearing, a screw, and a nut. In one example, the self-lubricating bearing has an inner diameter of 6 mm, the screw passing through the self-lubricating bearing is an M5 D6 ISO 7379 screw, and the nut is an M5 nut.

As indicated above, the two first connection portions 310A, 310B are optional and their function may be implemented by different means. In another aspect of the invention, the two first connection portions 310A, 310B may be implemented by using the first flexible part 301 for connecting the first base member 300 to the vehicle. The first flexible part 301 then forms some kind of "hinge" forming the first rotational axis RA₁₀₀. The first rotational axis RA₁₀₀ of such a configuration may not be static during operation, since the first flexible part 301 is not entirely rigid. The flexible hinge enables the connection of the first air guiding device 100 to the vehicle without the components as described with respect to the first aspect, saving weight and reducing the overall number of parts.

FIG. 4 shows a top view of the mechanical connection 120 according to the first aspect. In the first aspect, the mechanical connection 120 is formed by the rod end bearing 400 as mentioned above. The rod end bearing 400 enables transferring the movement applied to the first air guiding device 100 to the second air guiding device 110. More specifically, the first air guiding device 100 rotates about the first rotational axis RA₁₀₀ such that the rotational movement is translated into translational and rotational motion of the rod end bearing 400 resulting in the rotation of the second air guiding device 110 about the second rotational axis RA₁₁₀.

It will be noted that any other mechanical connection 120 may also be used, if the connection is able to transmit the rotational movement of the first air guiding device 100 to the second air guiding device 110, in a case, in which the first rotational axis RA₁₀₀ and the second rotational axis RA₁₁₀ are non-parallel.

As shown in FIG. 4, the rod end bearing 400 comprises the angled U-shaped bracket 401. The angled U-shaped bracket 401 is arranged at the first base member 300 and can be made of a light metal (e.g., aluminum). The angled U-shaped bracket 401 accommodates self-lubricating bearings 403 on both sides of the bracket, as illustrated in FIG. 4. The self-lubricating bearings 403 are arranged in elongated slots (not shown in FIG. 4) provided at the angled U-shaped bracket 401. The elongated slots enable sliding of the self-lubricating bearings 403. A screw 405 is passed from one side through the self-lubricating bearings 403 and the angled U-shaped bracket 401 and secured from the other side by a nut 406. In one example, the self-lubricating bearings 403 comprise an inner diameter of 6 mm, the screw 405 is an M5 D6 ISO 7379 screw, and the nut 406 is an M5 nut. The rod end bearing 400 may also comprise washers. A spherical element 404 is separately provided at the screw 405 at a central position, i.e., in between the angled U-shaped bracket 401. The spherical element 404 forms together with one end of the rod element 402 a spherical joint/ball joint. Such joint connections are also known as "heim joints" or "rose joints". The other end of the rod element 402, a rod element attachment portion 604, is attached to the second air guiding device 110.

The attachment of the rod element 402 to the second air guiding device 110 is shown in FIG. 6. The second base member 600 of the second air guiding device 110 comprises a side wall 602. The side wall 602 is provided along an inner edge of the second base member 600 and extends upwards, i.e., along the negative z axis direction. The side wall 602 provides a fixed rivet nut 603. The fixed rivet nut 603 comprises an internal thread while the rod element attachment portion 604 comprises an external thread. In a mounted state, the rod element attachment portion 604 is screwed into the fixed rivet nut 603. Optionally, in the mounted state, an additional nut may be provided at the rod element attachment portion 604 for additionally securing the connection. The fixation of the rod element 402 with the fixed rivet nut 603 enables a secure and robust mechanical connection. In addition, the connection enables adjusting a length along an axis of the rod element 402 via the screw connection. The adjustment of the length hence enables compensation of tolerance errors between the first air guiding device 100 and the second air guiding device 110.

FIG. 5 shows the link member 500 according to the first aspect. The link member 500 comprises a U-shaped bracket. The U-shaped bracket enables a simple mechanical coupling of the first base member 300 to the actuator 130. The U-shaped bracket can be made of a light metal (e.g., aluminum). In one example, the U-shaped bracket is attached during lamination to the first base member 300 manufactured as a carbon-fiber reinforced plastic part. For example, the U-shaped bracket is placed on top of a layer of carbon fibers and one or more further layers of carbon fibers are subsequently laid down covering a bottom portion of the U-shaped bracket. In this case, curing of the first base member 300 is done with the U-shaped bracket.

FIG. 6 further shows two second connection portions 610A, 610B used to movably connect the second base member 600 to the underbody of the vehicle. It will be understood that the two second connection portions 610A, 610B serve as illustration purposes only and are, therefore, to be understood as one example to implement a connection of the second base member 600 to the vehicle. The two second connection portions 610A, 610B are provided at the second base member 600. The second connection portion 610A is arranged in a front-outer corner of the second base member 600, while the second connection portion 610B is arranged in a front-inner corner. Each of the second connection portions 610A, 610B comprises an L-shaped bracket accommodating a bonded holder which is similar to the bonded holder as described above with respect to the first connection portion 310A, 310B. The L-shaped bracket is either integrally formed with the second base member 600 or may be a separate component attached to the second base member 600. The bonded holder serves as a guidance for fixation means which form the second rotational axis RA₁₁₀. The fixation means may comprise, for example, a self-lubricating bearing, a screw, and a nut. In one example, the self-lubricating bearing has an inner diameter of 6 mm, the screw passing through the self-lubricating bearing is an M5 D6 ISO 7379 screw, and the nut is an M5 nut. As indicated above, the two second connection portions 610A, 610B are optional and their function may be implemented by different means, for example, but not limited to, a second connection member similar to the above-described first flexible part 301. The second connection member may connect the second base member 600 to the vehicle.

FIG. 7 shows a side view of the second air guiding device 110 according to the first aspect. FIG. 7 shows the second flexible part 601 provided at the second base member 600. The connection between the second flexible part 601 and the second base member 600 can be implemented via at least one of a screwed connection, a riveted connection, or an adhesive bond. The second flexible part 601 may be integrally formed with the second base member 600.

### LIST OF REFERENCE SIGNS

- 10: aerodynamic unit
- 100: first air guiding device
- 110: second air guiding device
- 120: mechanical connection
- 130: actuator
- 140: controller
- 300: first base member
- 300A: leading edge
- 301: first flexible part
- 310A; 310B: first connection portion
- 320: first surface
- 400: rod end bearing
- 401: angled U-shaped bracket
- 402: rod element
- 403: self-lubricating bearings
- 404: spherical element
- 405: screw
- 406: nut
- 500: link member
- 600: second base member
- 601: second flexible part
- 602: side wall
- 603: fixed rivet nut
- 604: rod element attachment portion
- 610A; 610B: second connection portion
- RA: rotational axis
- RA₁₀₀: first rotational axis
- RA₁₁₀: second rotational axis
- A₁₀₀: first angle
- A₁₁₀: second angle

## Claims

1. An aerodynamic unit (10) connectable to at least a part of a vehicle for adjusting aerodynamic properties of the vehicle, the aerodynamic unit (10) comprising:
a first air guiding device (100) configured to be movable for guiding a first air stream; and
a second air guiding device (110) configured to be movable for guiding a second air stream, wherein
the first air guiding device (100) is rigidly or movably connected to the second air guiding device (110).

2. The aerodynamic unit (10) according to claim 1, wherein
at least one of the first air guiding device (100) and the second air guiding device (110) is configured to be rotatable about a rotational axis (RA).

3. The aerodynamic unit (10) according to claim 1, further comprising
a first rotational axis (RA₁₀₀) for rotating the first air guiding device (100); and
a second rotational axis (RA₁₁₀) for rotating the second air guiding device (110), wherein
the first rotational axis (RA₁₀₀) is different from the second rotational axis (RA₁₁₀).

4. The aerodynamic unit (10) according to claim 3, wherein
the first rotational axis (RA₁₀₀) and the second rotational axis (RA₁₁₀) are non-parallel.

5. The aerodynamic unit (10) according to any one of the preceding claims, wherein
the first air guiding device (100) is connected to the second air guiding device (110) via a mechanical connection (120), preferably the mechanical connection (120) comprises a mechanical joint, more preferably the mechanical connection (120) comprises a rod end bearing (400).

6. The aerodynamic unit (10) according to any one of the preceding claims, further comprising
an actuator (130) configured to move the first air guiding device (100) and/or the second air guiding device (110) for enabling movement of the first air guiding device (100) and the second air guiding device (110).

7. The aerodynamic unit (10) according to any one of the preceding claims, wherein
the first air guiding device (100) comprises a first base member (300) and the second air guiding device (110) comprises a second base member (600), wherein
the first base member (300) is connected to the second base member (600), and wherein
the first base member (300) comprises a first connection portion (310A; 310B) for connecting the first base member (300) to at least a part of the vehicle and the second base member (600) comprises a second connection portion (610A; 610B) for connecting the second base member (300) to at least a part of the vehicle.

8. The aerodynamic unit (10) according to any one of the preceding claims, wherein
at least one of the first base member (300) and the second base member (600) is made of fiber-reinforced plastic, preferably the fiber-reinforced plastic comprises carbon fibers.

9. The aerodynamic unit (10) according to any one of the preceding claims, wherein
the first base member (300) comprises a first flexible part (301) for supporting guidance of the first air stream and the second base member (600) comprises a second flexible part (601) for supporting guidance of the second air stream.

10. The aerodynamic unit (10) according to claim 1, wherein
at least one of the first flexible part (301) or the second flexible part (601) is made of a synthetic material, preferably the synthetic material is a rubber, more preferably the synthetic material is an ethylene propylene diene monomer (EPDM) rubber.

11. The aerodynamic unit (10) according to any one of the claims 3 to 10, wherein
the first air guiding device (100) is rotatable by a first angle (A₁₀₀) about the first rotational axis (RA₁₀₀) and the second air guiding device (110) is rotatable by a second angle (A₁₁₀) about the second rotational axis (RA₁₁₀), wherein the first angle (A₁₀₀) is different to the second angle (A₁₁₀).

12. The aerodynamic unit (10) according to any one of the preceding claims, wherein
the aerodynamic unit (10) is connectable to the vehicle via at least one of a screwed connection, a riveted connection, or an adhesive bond.

13. A vehicle comprising at least one aerodynamic unit (10) according to any one of the preceding claims, wherein the at least one aerodynamic unit (10) is connected to at least a part of the vehicle.

14. The vehicle according to claim 13, wherein
each one of the at least one aerodynamic unit (10) is individually controllable by a controller (140).

15. The vehicle according to claim 13, wherein
the vehicle comprises at least two aerodynamic units (10), wherein the at least two aerodynamic units (10) are commonly controllable by a controller (140).
